# EUROPEAN PATENT APPLICATION

(11) **EP 3 351 368 A1**
(43) Date of publication of application: **25.07.2018**
(21) Application number: 17382022.6
(22) Date of filing: 18.01.2017
(51) Int. Cl.: B29C 67/00, B29C 47/00, B29C 47/56, B29C 47/06, B29C 47/08, B29C 47/12, B33Y 30/00

(54) **EXTRUSION SYSTEM FOR 3D PRINTERS**

(71) Applicant: Soluciones Sicnova SL, 23009 Jaen (ES)
(72) Inventor: LLAVERO LÓPEZ DE VILLALTA, Ángel, 23700 LINARES (ES)
(74) Representative: Aguilar Catalán, Blanca

(57) **Abstract**

This extrusion system comprises extruders (1) for providing several materials, which concur at a single shared output nozzle (2).

## Description

### INVENTION SUBJECT

The present invention is referred to an extrusion system for 3D printers, which allows 3D printing of parts by additive manufacturing with multiple channels.

The invention subject is to provide an extrusion system where the different materials from their respective extruders concur at the same common nozzle in order to obtain the 3D printed part. This allows to print/manufacture more easily parts with various materials, and also to obtain more quality and above all, almost no dimensional deviation from the original file or plan.

### INVENTION BACKGROUND

3D printers and/or additive manufacturing machines which use different extruders to obtain 3D printed parts with different materials usually have some typical problems and inconvenient. These are the most significant ones:
- Printed parts quality reduction. When we use a multiple extruder with many printheads, the extruder's head we're not using hampers the others in use. This extruder may leak out excess material and rub the printing part, which may cause deformation.
- Need for extruder calibration. The machine must know in which position each extruder is, in order to apply the right offset or margin. This is a complex process, because height is calibrated in the first place, so both extruders are located at the same position according to Z axis. If not, there is a risk of breaking the extruders or the build plate. The next step is to calibrate the X and Y axes. This operation is even more complex and requieres a lot of time. In this case we use a printing template with marks with which the offset is readjusted repeatedly until the template marks match, which prolongs the 3D printing process. In addition, the calibration method is not 100% reliable, so we'll always have to assume some dimensional deviation of the parts whenever we change the material. As a result, the part will never be in the tolerance range in relation to the original plan.
- Extruders usually decalibrate after some use. The calibration is not permanent, because any rubbing of the extruder with the part or any hit changes the offset between both components, so we'll need to calibrate again in order to print properly.
- Printing area reduction. The conventional double extruder system reduces the build area according to the distance between extruders. The reduction of the build area is equal to the separation between extruders, because each extruder has to reach the position of the main extruder, which limits the printing area.

In summary, when we use two extruders in the same 3D printer to get three dimensional printed parts, we'll have to face some negative factors during the manufacturing process which might even end up with a dimensional rejection of the part at the quality control.

### INVENTION DESCRIPTION

The proposed extrusion system for 3D printers fully solves all the issues previously described. To do this, the materials coming from the extruders concur at a single common nozzle, which provides a full range of benefits:
- The quality of the obtained part is not reduced, because there is no risk of leaking out excess material.
- There is no need to calibrate the extruder. With this system we only have one output for the material, so we don't need to apply any offset and any material will always deposit at the exact point where the previous material stopped.
- There is no possibility of decalibration, because the extruder is attached at different points and therefore is more durable and resists better the rubbing and hitting without deviation. In the case of receiving a strong impact during the printing, it will affect all the materials, so the perception of the possible imperfection will be minimized.

• The building area is not reduced, because no offset is applied and therefore we are able to print using the entire build area, both with single and multiple materials.

### DESCRIPTION OF THE PICTURES

A set of plans is attached to complement the following description, in order to help to a better understanding of the features of this invention, according to a preferential practical example of use. This is only for illustrative and not limiting purposes.

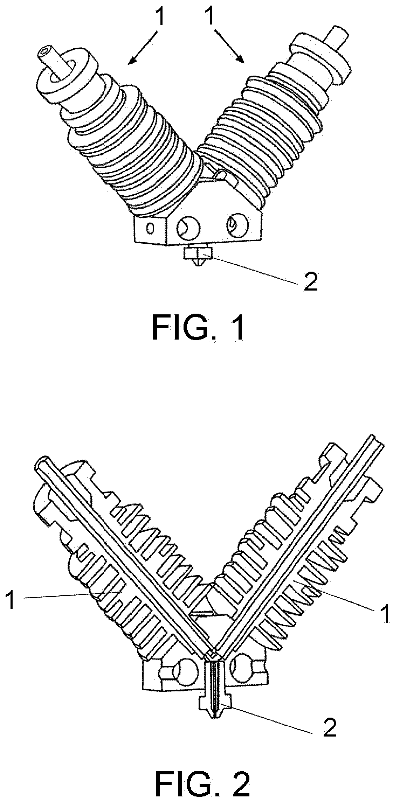

Figure 1.- Perspective view of a 3D printing extrusion system made according to the subject of the present invention.
Figure 2.- Sectional view of the ensemble from the previous figure.

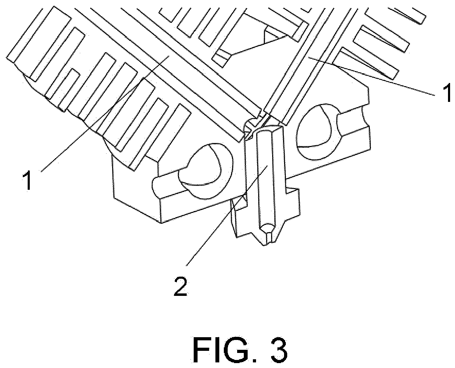

Figure 3.- Zoom of the common material output area.

### PREFERENTIAL IMPLEMENTATION OF THE INVENTION

As it can be seen in the referred figures, the invention is an extrusion system for 3D printers and/or additive manufacturing machines with multiple materials. These materials are provided by two independent extruders (1) in the practical example, but in this case that extruders (1) concur at a single and common output (2), so the materials (1) come out through the same nozzle (2). It allows printing or manufacturing a part with different materials and no deviation at all from the original file or plan.

## Claims

1. st.- Extrusion system for 3D printers which comes from several extruders (1) to provide the needed materials for obtaining a 3D printed part which is characteristic because the extruders (1) concur at a single shared nozzle (2) through which the different materials are provided.
